## Europäisches Patentamt
## European Patent Office
## Office européen des brevets

(19)

(11) Numéro de publication: **0 013 040**
**A1**

(12)

# DEMANDE DE BREVET EUROPEEN

(21) Numéro de dépôt: **79200731.2**

(22) Date de dépôt: **06.12.79**

(51) Int. Cl.³: **B 29 C 17/02**

(30) Priorité: **12.12.78 NL 7812064**
**12.12.78 NL 7812065**

(43) Date de publication de la demande:
**09.07.80 Bulletin 80/14**

(84) Etats Contractants Désignés:
**BE DE FR GB IT NL**

(71) Demandeur: **POLVA-NEDERLAND B.V.**
**Flevolaan, 5**
**Enkhuizen(NL)**

(72) Inventeur: **Acda, Petrus Marinus**
**Vrijdom, 13**
**Enkhuizen(NL)**

(72) Inventeur: **Karreman, Jacob**
**Drie Banen, 63**
**NL-1601 NN Enkhuizen(NL)**

(74) Mandataire: **Eischen, Roland**
**Solvay & Cie, Dept. de la Propriété Industrielle Rue de**
**Ransbeek 310**
**B-1120 Bruxelles(BE)**

(54) **Procédé pour la réalisation de pièces de couplage en matière thermoplastique et dispositif pour sa réalisation.**

(57) L'invention concerne un procédé pour la réalisation de pièces de couplage comportant une rainure annulaire en contre-dépouille éventuellement garnie d'un anneau d'étanchéité dans lequel on préforme d'abord un manchon de diamètre interne croissant par palier vers l'extrémité ouverte et on postforme la partie terminale du manchon de façon à former la rainure annulaire après avoir éventuellement introduit un anneau d'étanchéité dans le manchon préformé et dans lequel lors du préformage, on maintient uniquement la partie terminale du manchon préformé à température de d'éformation et l'on refroidit le reste du manchon préformé, la partie terminale du manchon préformé étant refroidie après postformage.

Le dispositif selon l'invention comprend un mandrin de formage (2) dont la partie avant comporte une chambre de réfrigération (25) et dont la partie arrière comporte des moyens de chauffage (23), un anneau de postformage (45) déplaçable radialement et axialement et équipé d'une chambre (47) de réfrigération et éventuellement une douille de moulage (5), un anneau de fermeture (31) équipé de moyens de chauffage (33) et un organe d'introduction de l'anneau d'étanchéité (37) déplaçable radialement et axialement.

./...

FIG 8

- 1 -

Procédé pour la réalisation de pièces de couplage
en matière thermoplastique et dispositif pour sa réalisation

Cas POL.78/3-4

(PHK.130-131)

POLVA-NEDERLAND B.V.

La présente invention concerne un procédé pour réaliser des pièces de·couplage en matière thermoplastique présentant une rainure annulaire en contredépouille emprisonnant éventuellement un anneau d'étanchéité dans lequel on préforme d'abord sur l'extrémité chaude d'un tuyau en matière thermoplastique un manchon ayant un diamètre interne croissant par palier dans la direction de l'extrémité libre, dans lequel on postforme ensuite la partie terminale du manchon préformé pour former la rainure annulaire en contredépouille et dans lequel enfin on refroidit le manchon postformé, ainsi qu'un dispositif perfectionné pour la réalisation de ce procédé.

Des procédés de ce type sont déjà décrits dans les demandes de brevets néerlandais 74.08627 et 74.08628 déposées au nom de WAVIN B.V. et 72.09328 déposée au nom de FORSHEDA IDEUTVECKLING A.B. ainsi que dans le brevet suisse 490956 déposé au nom de KUNSTSTOFFWERK GEBRUDER ANGER G.m.b.H. und Co.

Dans ces procédés, le manchon préformé obtenu au premier stade est soit réchauffé complètement en vue du postformage soit maintenu entièrement à température de formage et postformé. Ces procédés peuvent dès lors donner lieu à des variations de dimensions des pièces de couplage formées ou à l'apparition de tensions internes dans les parois des manchons ainsi obtenus.

L'invention a pour but un procédé qui ne présente pas ces inconvénients et qui rend possible une production en continu de pièces de couplage plus simple et plus efficace tout en permettant une amélioration de la qualité.

L'invention a dès lors pour objet un procédé pour la réalisation de pièces de couplage en matière thermoplastique présentant une rainure annulaire en contredépouille impliquant le préformage, sur l'extrémité d'un tuyau en matière thermoplastique, d'un manchon ayant un diamètre interne croissant par paliers dans la direction de l'extrémité libre, le postformage de la partie terminale du manchon préformé pour former la rainure en contredépouille et le refroidissement du manchon postformé dans lequel, durant le préformage, on maintient la partie terminale du manchon préformé à une température telle que celle-ci demeure élastiquement déformable tandis que l'on refroidit le reste du manchon préformé à une température telle que celui-ci ne soit plus déformable.

Par la réalisation des pièces de raccord par ce procédé direct, les coûts de production sont diminués par la suppression de frais supplémentaires de transport , de main d'oeuvre, et de finition tandis que le chauffage en vue du formage peut être équilibré et homogène ce qui empêche l'apparition de tensions internes dans la partie terminale moulée.

Dans le procédé selon l'invention, le préformage est réalisé par un procédé d'évasement de l'extrémité d'un tuyau ou d'un morceau de tuyau préalablement chauffé ou encore par un procédé de moulage par injection.

Selon un mode de réalisation particulier du procédé conforme à l'invention, il est loisible de produire directement des pièces de couplage dont la rainure annulaire en contredépouille enserre un anneau d'étanchéité. A cet effet, il suffit d'introduire un anneau d'étanchéité dans la partie terminale du manchon préformé et de postformer ensuite cette partie terminale autour de l'anneau

0013040

- 3 -

d'étanchéité de façon à former la rainure annulaire en contre-dépouille emprisonnant cet anneau d'étanchéité.

Le procédé selon l'invention présente dans ce cas l'avantage de ne pas dépendre de façon absolue de la forme et des propriétés mécaniques et physiques de l'anneau d'étanchéité telles que la dureté, la résistance à la chaleur, l'élasticité, etc. On peut dès lors obtenir des pièces de couplage de formes variées comportant des anneaux d'étanchéité de formes également variées.

La présente invention a également pour objet un dispositif pour la réalisation du procédé qui peut faire l'objet de nombreuses variantes de réalisation.

Ce dispositif se distingue des dispositifs déjà usités par le fait qu'il comporte un mandrin de formage déplaçable axialement dans l'extrémité ouverte du tuyau à préformer et dont le diamètre croît par paliers d'une valeur minimale à son extrémité libre jusqu'à une valeur maximale sur sa partie postérieure, la partie avant du mandrin comportant une chambre interne pour la circulation d'un fluide réfrigérant et la partie postérieure comportant des moyens de chauffage.

De ce fait, durant le préformage du manchon, la partie terminale du manchon préformé peut être maintenue à température de déformation élastique grâce aux moyens de chauffage prévus sur la partie postérieure du mandrin de formage tandis que la partie restante du manchon peut être refroidie simultanément à une température inférieure à sa température de déformation par circulation d'un fluide réfrigérant dans la chambre interne prévue dans la partie avant de ce même mandrin.

Les moyens de chauffage de la partie postérieure du mandrin de formage peuvent être quelconques. Ils peuvent notamment être constitués par une chambre interne indépendante de la chambre interne prévue à la partie avant du mandrin et raccordable à une source de fluide de chauffage ou encore par une douille externe comportant un élément de chauffage par résistance. Il est évidemment utile de prévoir une isolation thermique par exemple au moyen d'une lame d'air entre la partie réfrigérée du mandrin de formage et la partie maintenue chaude.

Selon un autre mode de réalisation du dispositif conforme à l'invention le mandrin de formage peut être pourvu de canaux qui débouchent sur sa périphérie et qui peuvent être raccordés à une source de vide. Dans ce mode de réalisation le manchon est préformé en faisant agir le vide sur le pourtour du mandrin de formage ce qui assure un contact parfait entre ceux-ci et partant une réfrigération et un maintien à température mieux contrôlables des différentes parties du manchon préformé.

Le dispositif conforme à l'invention comporte également un anneau de postformage déplaçable axialement et radialement entre une position de repos et une position de travail et qui en position de travail délimite un espace de postformage avec le mandrin de formage, ledit anneau de postformage étant pourvu d'une chambre interne pour la circulation d'un fluide réfrigérant.

Selon un mode de réalisation préférentielle le dispositif conforme à l'invention comporte un collier de serrage du tuyau à traiter qui est déplaçable axialement par rapport au mandrin de formage et le préformage est alors réalisé par un déplacement relatif entre le collier de serrage emprisonnant le tuyau et le mandrin de formage.

Selon un autre mode de réalisation préférentielle du dispositif conforme à l'invention celui-ci comporte encore une douille de formage et un anneau de fermeture qui sont déplaçables par rapport au mandrin de formage entre une position de repos et une position de travail et qui en position de travail délimitent un espace de préformage avec le mandrin de formage, la douille de moulage étant pourvue d'une chambre interne pour la circulation d'un fluide réfrigérant et l'anneau de fermeture étant pourvu de moyens de chauffage.

Ce dernier mode de réalisation convient particulièrement pour la réalisation de pièces de couplage ayant des épaisseurs de paroi relativement élevées dans lesquelles l'amincissement des parois engendré par l'évasement peut être compensé ou même être surcompensé par un refoulement de matière.

Selon un autre mode de réalisation du dispositif selon l'invention, l'anneau de postformage est pourvu d'une surface de butée qui coopère avec le mandrin de formage et d'organes d'entraînement qui coopèrent avec des organes d'entraînement couplés au mandrin de formage.

Ce mode de réalisation permet une commande particulièrement simple des déplacements de l'anneau de postformage. Après préformage du manchon et retrait du mandrin de formage de ce manchon, l'anneau de formage est placé, par un déplacement radial par exemple au moyen d'un cylindre hydraulique, dans la trajectoire du mandrin de formage c'est-à-dire entre le manchon préformé et l'extrémité du mandrin de formage. Par un déplacement subséquent du mandrin de formage dans la direction du manchon préformé, ce mandrin vient en contact avec la surface de butée de l'anneau de postformage et celui-ci est entraîné en position de travail par le mandrin de formage. Après postformage et refroidissement de la partie postformée du manchon, le mandrin de formage est extrait du manchon postformé et entraîne avec lui l'anneau de postformage par l'intermédiaire des organes d'entraînement.

Selon un autre mode de réalisation du dispositif selon l'invention utilisable dans le cas où l'on désire produire directement des pièces de couplage dont la rainure annulaire en contre-dépouille enserre un anneau d'étanchéité, celui-ci comprend en outre un organe d'introduction de l'anneau d'étanchéité déplaçable axialement et radialement qui intervient entre les opérations de préformage et de postformage pour introduire un anneau d'étanchéité dans la partie terminale du manchon préformé.

L'organe d'introduction de l'anneau d'étanchéité peut être réalisé de façon telle qu'il agit seulement comme un support pour maintenir l'anneau d'étanchéité à introduire dans une position telle que celui-ci puisse être saisi par le mandrin de formage et introduit par celui-ci dans la partie terminale du manchon.

Selon un autre mode de réalisation qui est préféré, l'organe d'introduction de l'anneau d'étanchéité est annulaire et comporte une surface support de l'anneau d'étanchéité, une surface de butée coopérant avec le mandrin de formage et des organes d'entraînement qui coopèrent avec des organes d'entraînement couplés avec le mandrin de formage. Dans ce mode de réalisation, il est possible d'obtenir une commande simple du déplacement de l'organe d'introduction de l'anneau d'étanchéité et un positionnement rapide et fiable de l'anneau d'étanchéité dans la partie terminale du manchon préformé sans risque de reprise de cet anneau. En effet, dans ce mode de réalisation, il suffit de placer radialement l'organe d'introduction entre le mandrin de formage extrait du manchon préformé et ce, par exemple, au moyen d'une unité hydraulique. Lors du déplacement subséquent du mandrin de formage vers le manchon préformé, ce dernier vient en contact avec la surface de butée de l'organe d'introduction et entraîne celui-ci dans le manchon préformé avec pour résultat que l'anneau d'étanchéité reposant sur la surface de support de l'organe d'introduction est appliqué en place dans la partie terminale du manchon préformé. Par la suite, lors du retrait subséquent du mandrin de formage du manchon préformé, l'organe d'introduction de l'anneau d'étanchéité est également extrait du manchon préformé par l'intermédiaire des organes d'entraînement tandis qu'il abandonne l'anneau d'étanchéité mis en place dans la partie terminale du manchon préformé.

Le procédé et le dispositif conforme à l'invention sont par ailleurs explicités plus en détail dans la description de certains modes de réalisation qui va suivre et qui est donnée à titre purement illustratif.

Dans cette description, on se référera aux figures des dessins annexés dans lesquelles :

la figure 1 est une vue en élévation et en coupe d'un dispositif selon l'invention durant le préformage du manchon sur l'extrémité d'un tuyau en matière thermoplastique.

la figure 2 est une vue en élévation et en coupe du dispositif selon la figure 1 dans la position après préformage du manchon

la figure 3 est une vue en élévation et en coupe du dispositif selon la figure 1 dans la position avant postformage de la partie terminale du manchon

la figure 4 est une vue en élévation et en coupe du dispositif selon la figure 1 durant le postformage de la partie terminale du manchon

la figure 5 est une vue en élévation et en coupe d'un autre dispositif conforme à l'invention

la figure 6 est une vue en élévation et en coupe d'un troisième dispositif conforme à l'invention et permettant le placement d'un anneau d'étanchéité, le dispositif étant montré durant le préformage du manchon

la figure 7 est une vue en élévation et en coupe du dispositif selon la figure 6 en position après préformage du manchon

les figures 8, 9, 10 sont des vues en élévation et en coupe du dispositif selon la figure 6 en position avant, durant et après introduction de l'anneau d'étanchéité

la figure 11 est une vue en élévation et en coupe du dispositif selon la figure 6 durant le postformage de la partie terminale du manchon

la figure 12 est une vue en élévation et en coupe d'un autre mode de réalisation du dispositif conforme à l'invention permettant la pose d'un anneau d'étanchéité

les figures 13 à 17 sont des vues en élévation et en coupe de différents types de pièces de raccord réalisables grâce au procédé selon la présente invention.

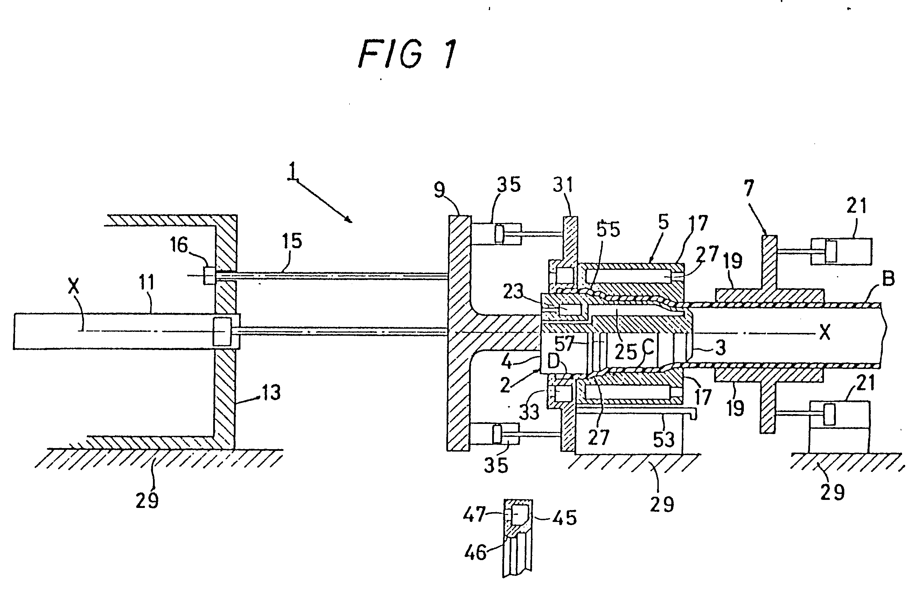

Le dispositif illustré par les figures 1 à 4 comporte essentiellement un mandrin de formage 2 ayant un diamètre croissant par paliers depuis son extrémité avant 3 vers sa partie postérieure 4, une douille de formage 5 et un collier de serrage 7. Le mandrin de formage 2 est relié rigidement à une plaque 9. Au moyen d'un cylindre hydraulique 11 qui est fixé dans un boîtier 13, la plaque 9 et le mandrin de formage 2 sont déplaçables axialement suivant l'axe XX du dispositif. La position du mandrin de formage 2 montré à la figure 1 en position de travail est déterminée de façon précise par la butée 16 montée sur une tige 15 solidaire de la plaque 9. La douille de formage 5 comprend deux coquilles de formage 17 séparées par un plan radial et qui sont déplaçables l'une par rapport à l'autre en direction radiale par des moyens manuels, pneumatiques, hydrauliques ou électriques non représentés. Le collier de serrage 7 est constitué de deux coquilles de serrage 19 séparées par un plan radial et qui sont déplaçables l'une par rapport à l'autre en direction radiale par des moyens non représentés et ensemble en direction axiale par l'intermédiaire de cylindres hydrauliques 21. Le mandrin de formage est pourvu sur sa partie antérieure 3 d'une chambre de circulation 25 pour la circulation d'un fluide chauffant ou refroidissant et sur sa partie postérieure 4 d'une chambre de chauffage 23.

Les deux coquilles de formage 17 sont pourvues d'une chambre de circulation 27.

Les parties fixes du dispositif et en particulier son châssis sont seulement esquissées et désignées de façon générale par le repère 29. Le dispositif comporte encore un anneau de fermeture 31 pourvu d'une chambre de chauffage 33 et qui est déplaçable axialement par l'intervention d'un cylindre hydraulique 35 par rapport à la plaque 9 et au mandrin de formage 2.

Le dispositif comporte encore un anneau de postformage 45 comportant une surface de butée 46 annulaire et une chambre de réfrigération 47. Cet anneau est déplaçable en direction radiale au moyen d'une barre de liaison 50 qui est couplée à un cylindre hydraulique 49. L'anneau de postformage 45 est en outre équipé d'un organe d'entraînement 51 qui peut coopérer avec un second organe d'entraînement 53 qui est fixé sur l'anneau de fermeture et, par l'intermédiaire de la plaque 9, couplé au mandrin de formage 2.

Le dispositif qui vient d'être décrit fonctionne comme suit.

Pour la réalisation d'une pièce de raccord A sur l'extrémité du tuyau B en matière thermoplastique, le mandrin de formage 2, la douille de formage 5 et l'anneau de fermeture 31 sont chauffés par une circulation d'un fluide chaud dans les chambres 23 et 25 du mandrin 27 de la douille et 33 de l'anneau de fermeture.

En même temps, l'extrémité du tuyau B à travailler est également chauffée de façon que la matière thermoplastique soit élastiquement formable. Après quoi, dès que le tuyau B est fixé dans le collier de serrage 7 de façon que la partie terminale chaude du tuyau B se trouve à hauteur de la douille de formage 5, on procède à la fermeture de cette douille sur l'extrémité du tuyau B.

Le mandrin de formage 2 et l'anneau de fermeture 31 sont alors amenés en position de travail illustrée à la figure 1, position dans laquelle le mandrin de formage, la douille de formage et l'anneau de fermeture 31 délimitent un espace de préformage. Dans cette phase, l'extrémité chaude du tuyau B est préformée en une partie du manchon C dont le diamètre croît par palier dans la direction de son extrémité libre et dont le diamètre maximum se trouve au niveau de cette extrémité.

Par un déplacement axial du collier de serrage 7 dans la direction du mandrin de formage 2, l'extrémité chaude du tuyau B subit un refoulement et de ce fait l'espace de préformage est complètement rempli de matière thermoplastique.

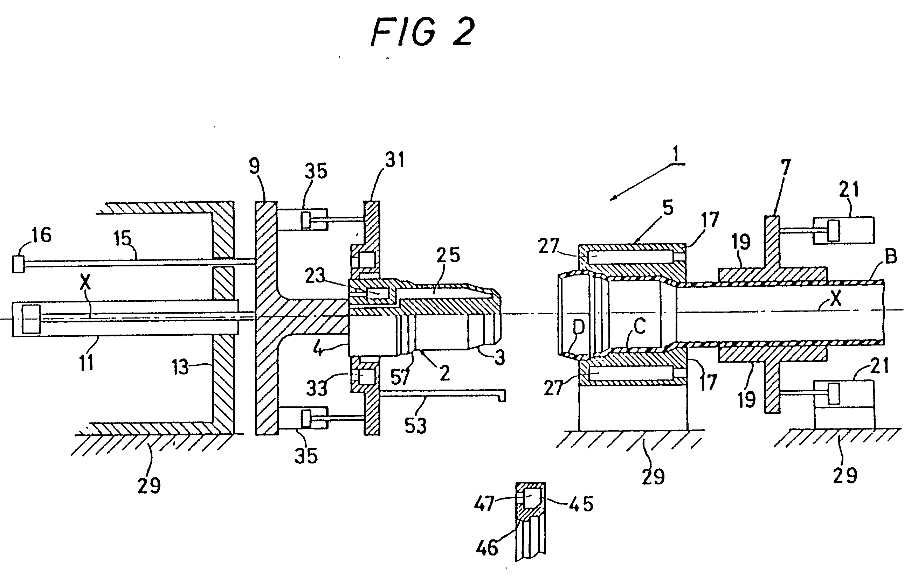

Ensuite, le fluide chaud circulant dans les chambres 25 du mandrin de formage 2 et 27 de la douille de formage 5 est remplacé par un fluide réfrigérant, tandis que la circulation de fluide chaud est maintenue dans les chambres 23 du mandrin de formage 2 et 33 de l'anneau de fermeture 31. De ce fait, d'une part, la partie du manchon préformé C qui est entourée par les chambres 25 et 27 est refroidie de façon telle que celle-ci n'est plus déformable, et, d'autre part, la partie élargie D du manchon entourée par les chambres 23 et 33 est maintenue à une température telle que celle-ci demeure déformable. Le mandrin de formage 2 est alors retiré du manchon C ainsi préformé et ramené en position de repos avec l'anneau de fermeture 31. La figure 2 donne cette situation. On constate que l'extrémité D déformable du manchon est quelque peu resserrée du fait qu'elle n'est plus soutenue par le mandrin, mais ce resserrement est minimisé du fait que la partie postérieure du manchon préformé est rigidifiée.

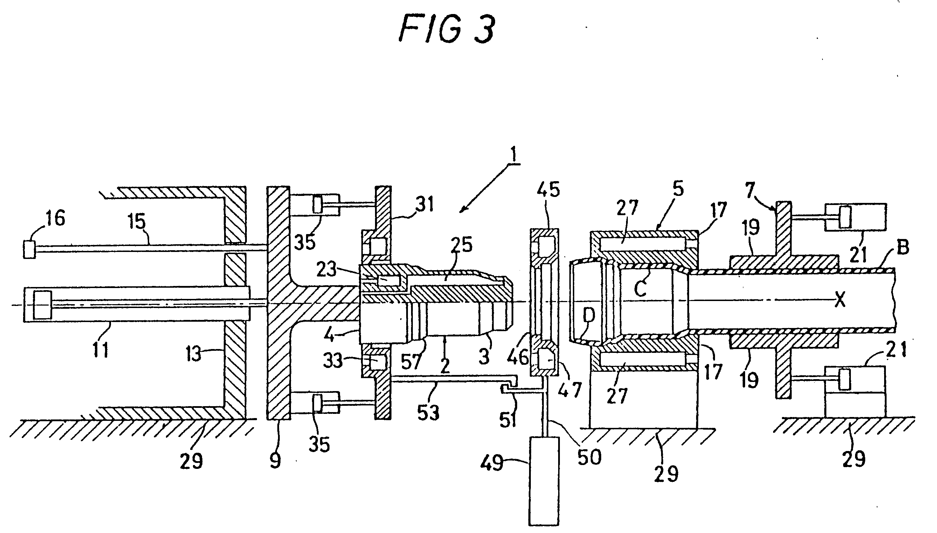

L'anneau de postformage 45 est alors amené radialement dans l'espace libre entre l'extrémité du mandrin de formage 2 et la douille de formage 5 par le cylindre hydraulique 49 et la tige de liaison 50. Dans cet état intermédiaire illustré à la figure 3, l'axe de l'anneau de postformage coïncide pratiquement avec l'axe XX du dispositif.

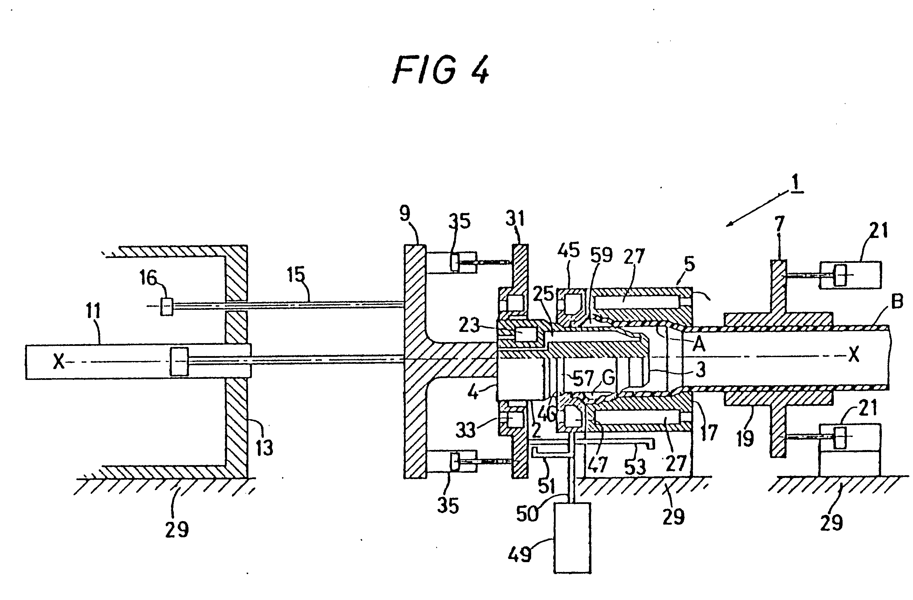

Ensuite, le mandrin de formage 2 et l'anneau de fermeture 31 sont déplacés à nouveau axialement dans la direction de la douille de formage 5. De ce fait, l'anneau de postformage 45 vient en contact par sa surface de butée 45 avec la surface 57 sur la partie externe du mandrin de formage 2 et cet anneau est alors entraîné axialement par le mandrin de formage de sa position intermédiaire illustrée à la figure 3 vers sa position de travail illustrée à la figure 4, position dans laquelle cette anneau et le mandrin de formage 2 délimitent un espace de postformage 59. Durant ce déplacement, le mandrin de formage 2 est d'abord inséré dans la partie C du manchon, après quoi l'anneau de postformage 45 par son contour interne vient en contact avec la matière plastique encore chaude et déformable de la partie terminale D du manchon qui se trouve dans l'espace de préformage et qui ainsi est amenée dans la forme finale voulue.

Durant cette mise en forme, l'anneau de formage est également refroidi par une circulation d'un milieu réfrigérant dans sa chambre 47 si bien que la partie terminale D postformée est refroidie et rendue indéformable. La figure 4 montre en fait la pièce de couplage finalement obtenue.

Enfin, le mandrin de formage 2 est à nouveau retiré du manchon postformé et ramené avec l'anneau de fermeture 31 en position de repos. Dans ce mouvement, l'anneau de postformage 59 est entraîné axialement et ramené dans sa position intermédiaire par l'organe d'entraînement 53 qui coopère avec l'organe d'entraî-

nement 51. Dès qu'il a atteint cette position, l'anneau de postformage 59 peut être remis radialement en position de repos par l'intermédiaire du cylindre hydraulique 49 et de la tige de liaison 50. Après ouverture de la douille de formage 5 et du collier de serrage 7, la pièce de raccord formée peut être extraite du dispositif. Le dispositif 1 se retrouve alors dans la position illustrée par la figure 1 et peut être utilisé pour la réalisation d'une nouvelle pièce de raccord après réchauffage de ses éléments de préformage.

Le dispositif qui vient d'être décrit convient particulièrement pour le formage de pièces de raccord d'épaisseur de paroi relativement grande et/ou dans lesquelles l'amincissement de paroi dû à l'augmentation du diamètre est compensé ou surcompensé par refoulement de matière, l'épaisseur de paroi étant en fait fixée par la hauteur de l'espace de préformage 55 et de postformage 59 vue en direction radiale.

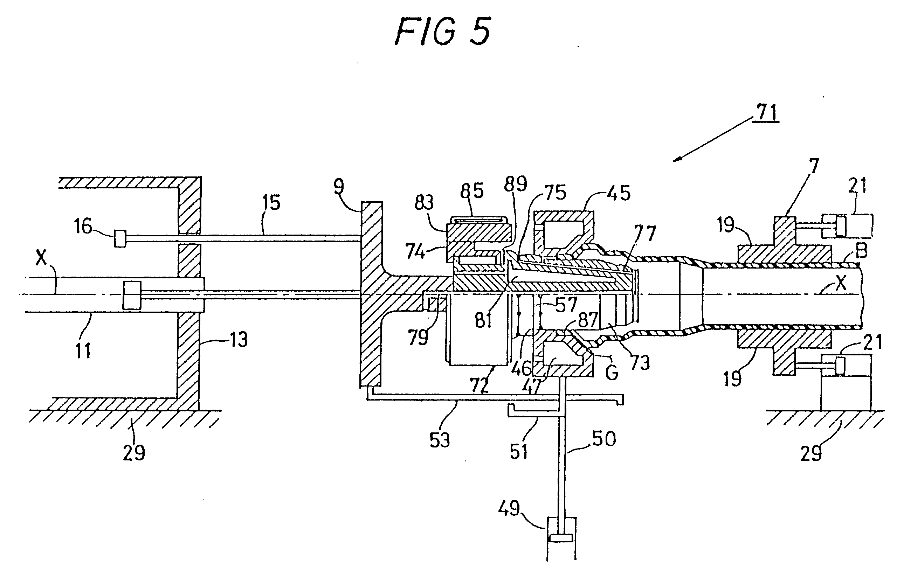

Pour la réalisation de pièces de couplage ayant une épaisseur de paroi relativement faible et/ou pour lesquelles une compensation de l'amincissement de paroi n'est pas souhaitée ou nécessaire, on peut, pour la réalisation du procédé selon l'invention, utiliser un autre mode de réalisation du dispositif qui est montré à la figure 5. Dans cette figure 5, les éléments communs avec ceux des figures 1 à 4 sont désignés par un repère identique.

Ainsi qu'il apparaît sur cette figure 5, le dispositif 71 comporte un mandrin de formage 72 muni de canaux 75 qui débouchent sur son pourtour externe et qui sont en liaison avec un canal commun 77 qui via un percement central 79 est raccordé à une source de vide non représentée.

Le mandrin de formage 72 est pourvu d'une chambre de réfrigération 81 dans sa partie antérieure et il est équipé sur sa partie postérieure d'une douille de chauffage 83 entourée extérieurement d'un élément de chauffage par résistance 85. Le dispositif selon ce mode de réalisation ne comporte pas de douille de formage.

Les autres éléments du dispositif sont similaires à ceux déjà décrits en rapport avec le dispositif se rapportant aux figures 1-4.

Dans le dispositif qui vient d'être décrit, le préformage du manchon est réalisé pneumatiquement.

A cet effet, l'extrémité à travailler du tuyau B est également chauffée de façon telle que la matière thermoplastique soit déformable, après quoi le tuyau B est fixé dans le collier de serrage 7. Par un déplacement relatif et axial du mandrin de formage 72 et du collier de serrage 7, le mandrin 72 est amené dans l'extrémité chauffée du tuyau B et celle-ci se déforme selon le profil externe de ce mandrin. Par les canaux 75, 77, 79, on applique alors un vide sur le pourtour externe du mandrin de formage 72 et de ce fait la partie terminale du tuyau est profilée de la façon souhaitée en un manchon C de diamètre croissant par paliers dans la direction de son extrémité libre dont la partie terminale D est évasée ainsi qu'il est montré à la figure 1.

Par une circulation d'un fluide réfrigérant dans la chambre 81 du mandrin de formage 72, la partie préformée du manchon à hauteur de cette chambre est refroidie et rendue indéformable tandis que par l'intermédiaire de l'élément de chauffage par résistance 85 et de la douille 83 la partie terminale D du manchon préformé est maintenue à une température telle que celle-ci demeure déformable.

Ainsi qu'il apparaît sur la figure 5, la partie arrière chauffée 74 du mandrin de formage est isolée thermiquement de la partie antérieure refroidie, par exemple par une lame d'air 89.

Le mode de travail de ce dispositif reste pour la suite identique à ce qui a été décrit pour le dispositif selon les figures 1-4.

La figure 5 montre le dispositif dans la phase de post-moulage et est donc comparable à la figure 4. L'anneau de postformage 45 est en position de travail et délimite avec le mandrin de formage 72 une chambre de postformage.

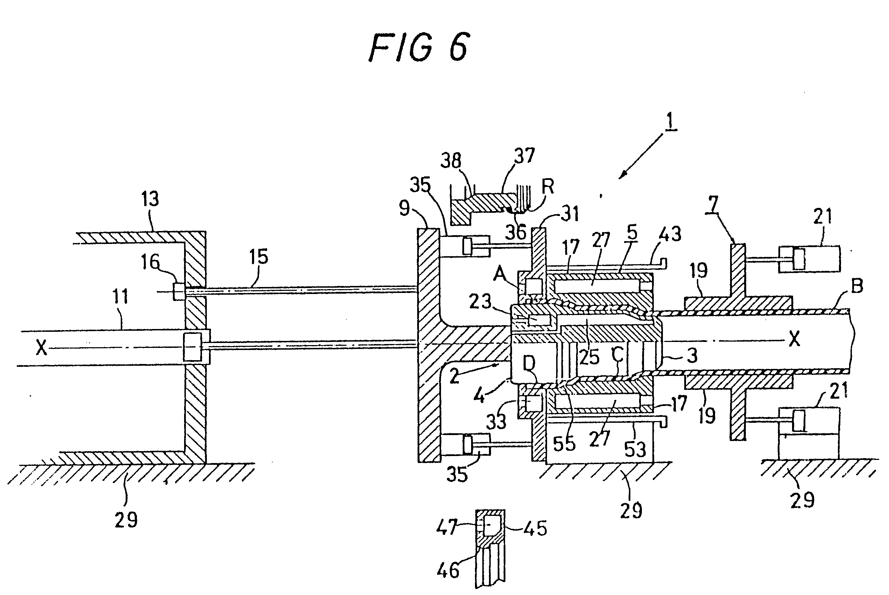

Les figures 6 à 11 illustrent un autre mode de réalisation du dispositif conforme à l'invention adapté pour la réalisation de pièces de raccord équipées directement d'un anneau d'étanchéité R emprisonné dans la rainure annulaire en contredépouille.

Ce dispositif comprend essentiellement un mandrin de formage 2 dont le diamètre croît par paliers depuis l'extrémité avant 3 vers la partie postérieure 4, un collier de serrage 7, une douille de formage 5 et un anneau de fermeture 31 qui sont réalisés de la même façon que pour le dispositif selon les figures 1-4. Ce dispositif comporte en outre un organe d'introduction de l'anneau d'étanchéité annulaire 37 pourvu d'une surface de butée annulaire 38 et d'une surface support 36 pour l'anneau d'étanchéité R. Cet organe 37 peut être déplacé radialement au moyen du cylindre hydraulique 39 et de la tige de liaison 40. En outre, cet organe 37 est équipé d'un organe d'entraînement 41 qui peut coopérer avec un organe d'entraînement 43 fixé sur l'anneau de fermeture 31. Le dispositif comporte encore un anneau de postformage 45 pourvu d'une surface de butée annulaire 46 et d'une chambre de réfrigération 47. Cet anneau 45 est déplaçable radialement au moyen d'une tige 50 couplée à un cylindre hydraulique 49 et il est pourvu d'un organe d'entraînement 51 qui peut coopérer avec un organe d'entraînement 53 fixé sur l'anneau de fermeture.

Le dispositif fonctionne de la façon suivante.

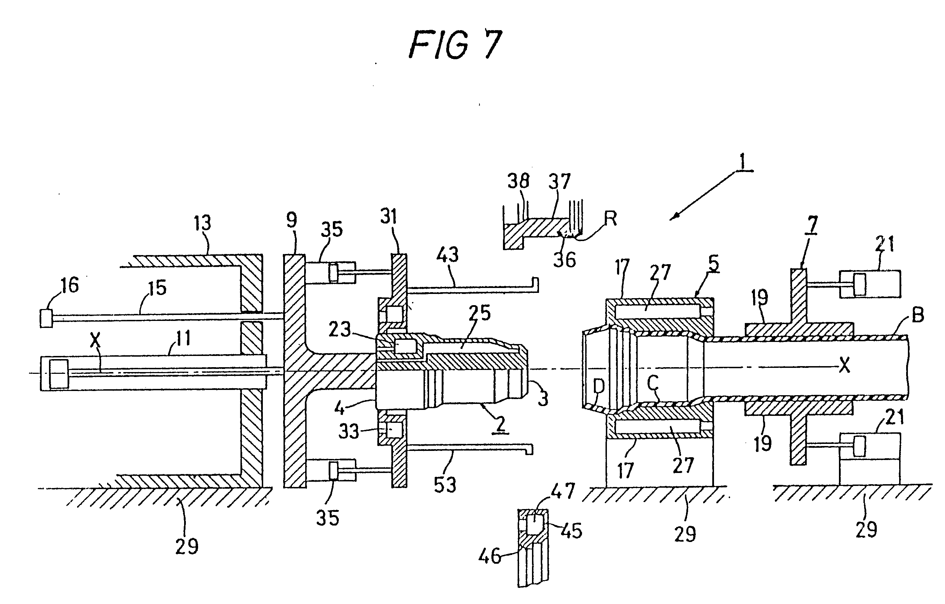

Le préformage du manchon A est exécuté d'une façon identique à celle qui a été décrite en rapport avec le dispositif selon les figures 1 et 2 qui correspondent aux figures 6 et 7.

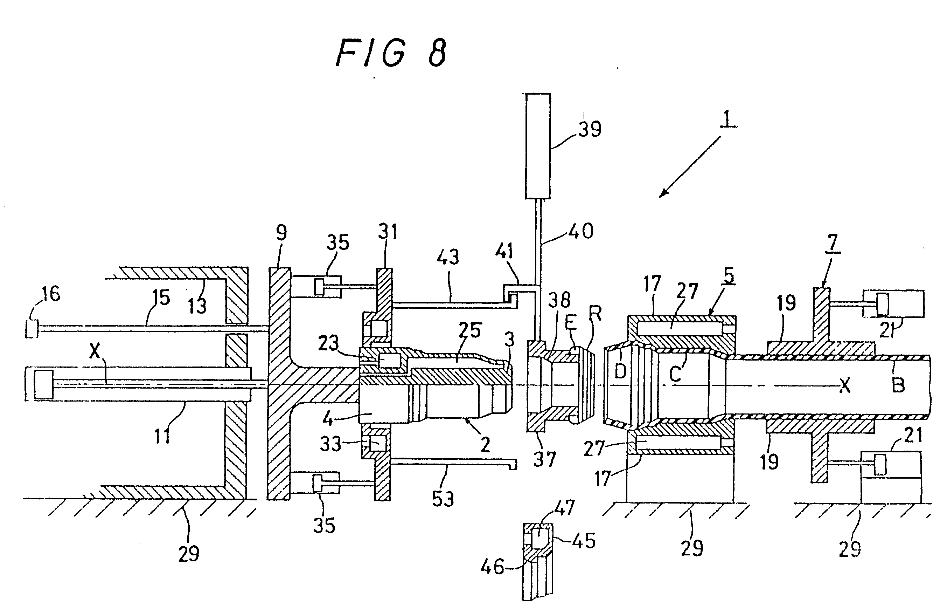

Lorsque le mandrin de formage 2 est retiré du manchon préformé et ramené avec l'anneau de fermeture en position de repos comme il est représenté à la figure 7, l'organe d'introduction de l'anneau d'étanchéité 37 garni d'un anneau d'étanchéité placé sur sa surface support 36 est déplacé radialement par l'intermédiaire du cylindre hydraulique 39 et de la tige de liaison 40 de façon à venir se placer entre l'extrémité du mandrin de formage 2 et la douille de formage 5 comme représenté à la figure 8. Dans cette position intermédiaire, l'axe de cet organe coïncide pratiquement avec l'axe XX du dispositif.

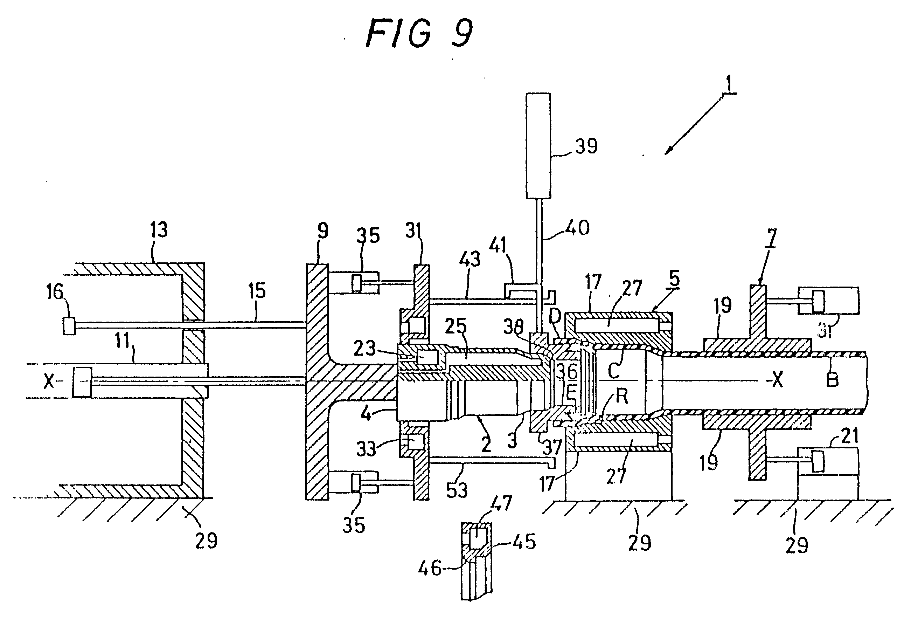

Ensuite, le mandrin de formage 2 et l'anneau de fermeture 31 sont de nouveau déplacés en direction de la douille de formage 5. De ce fait, l'extrémité libre 3 du mandrin de formage 2 vient en contact avec la surface de butée annulaire 38 sur le contour interne de l'organe d'introduction de l'anneau d'étanchéité 37 et cet organe est poussé dans le manchon préformé C pour le mandrin de formage 2. De ce fait, l'anneau d'étanchéité R est pressé dans la partie terminale D du manchon préforme C ainsi qu'il est représenté à la figure 9.

Du fait que l'extrémité libre 3 du mandrin de formage 2 et que la surface de butée 38 de l'organe d'introduction de l'anneau d'étanchéité 37 sont d'allure conique, cet organe 37 est parfaitement centré durant ce déplacement.

Par la suite, le mandrin de formage 2 et l'anneau de fermeture 31 sont déplacés de nouveau en position de repos et, de ce fait, l'organe d'introduction de l'anneau d'étanchéité 37 est retiré du manchon préformé C par la coopération entre les organes d'entraînement 41 et 43, en y abandonnant l'anneau d'étanchéité R et cet organe 37 est ramené dans la position intermédiaire déjà décrite. L'organe d'introduction de l'anneau d'étanchéité 37 peut alors être ramené en position de repos par un déplacement radial contrôlé par le cylindre hydraulique 39.

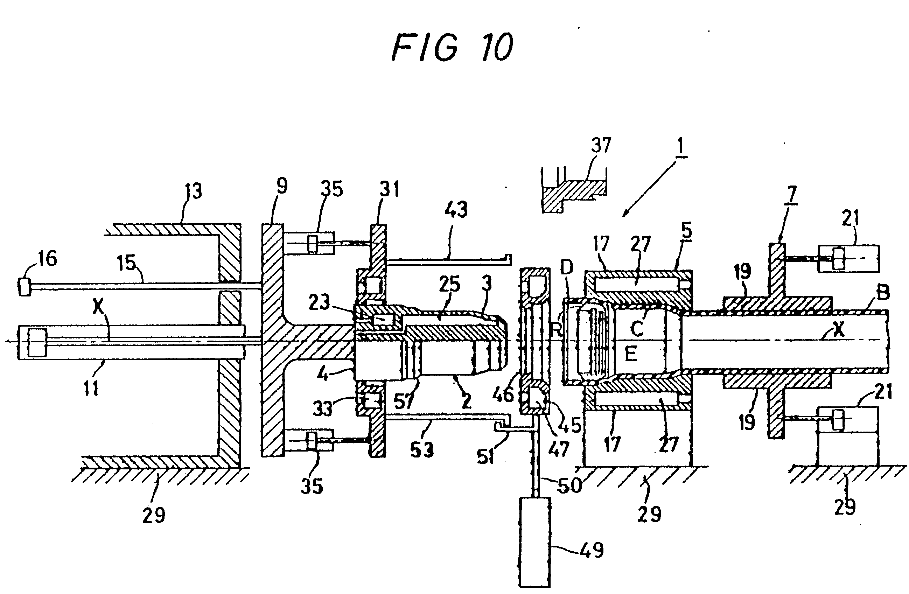

L'anneau de postformage 45 est alors inséré dans l'espace libre entre le mandrin de formage 2 et la douille de formage 5 par un déplacement radial provoqué par le cylindre hydraulique 49 et la tige de liaison 50. Dans cette position, qui est illustrée à la figure 10 l'axe de l'anneau de fermeture coïncide pratiquement avec l'axe XX de l'appareillage.

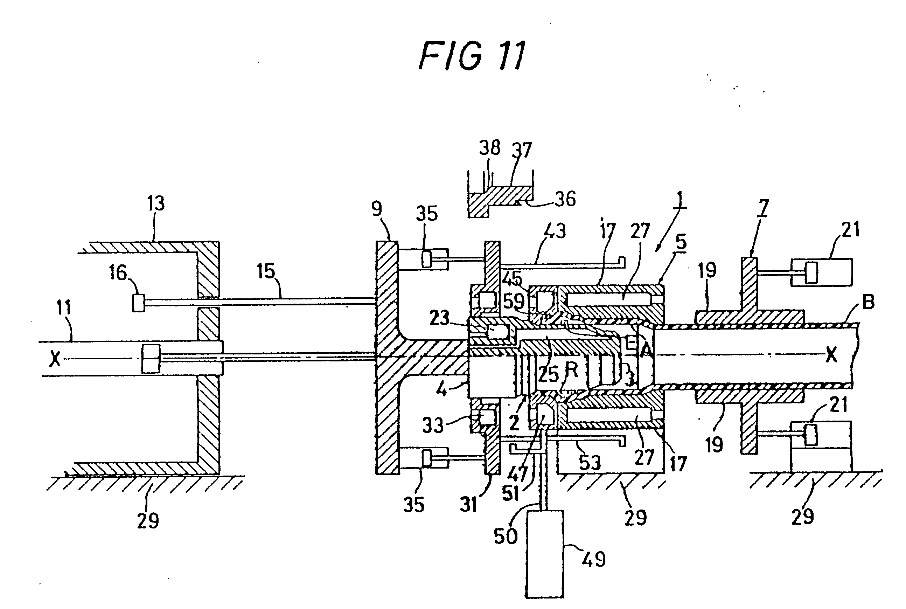

Ensuite, le mandrin de formage 2 et l'anneau de fermeture 31 sont une nouvelle fois déplacés axialement en direction de la douille de formage 5. De ce fait, la surface 57 du contour externe du mandrin de formage 2 vient en contact avec la surface de butée 46 de l'anneau de postformage 45 et cet anneau est

entraîné par le mandrin de formage 2 de la position intermédiaire illustrée à la figure 10 à la position de travail illustrée à la figure 11, position dans laquelle le mandrin de formage 2 et l'anneau de postformage 45 délimitent un espace de postformage 59. Durant ce déplacement, le mandrin de formage 2 pénètre dans le manchon préformé C et l'anneau d'étanchéité R se trouvant dans le manchon vient reposer autour de ce mandrin. Ensuite, l'anneau de postformage 45 vient en contact par son contour interne avec la partie terminale D encore chaude du manchon préformé C si bien que cette partie est postformée autour de l'anneau d'étanchéité R et dans l'espace 59. Durant ce postformage, l'anneau de postformage 45 est réfrigéré par un fluide circulant dans la chambre 47 si bien que la partie terminale postformée du manchon est refroidie et devient indéformable. La figure 11 montre la pièce de couplage A finalement obtenue avec l'anneau d'étanchéité R maintenu définitivement en place.

Finalement, le mandrin de formage est retiré définitivement de la pièce de couplage A postformée et ramené en position de repos avec l'anneau de fermeture 31. Conjointement, l'anneau de postformage 45 est ramené en position intermédiaire par la coopération entre les organes d'entraînement 51, 53. Cet anneau de postformage 45 peut alors être ramené en position de repos par un déplacement radial par l'intermédiaire du cylindre hydraulique 49 et de la tige de liaison 50. Après ouverture de la douille de formage 5 et du collier de serrage 7, la pièce de couplage peut être extraite du dispositif. Ce dispositif se retrouve alors dans la position de départ et après réchauffage des pièces de préformage - mandrin et douille - il peut entamer un nouveau cycle de traitement.

Le dispositif décrit ci-avant convient particulièrement pour le formage de pièces de couplage d'épaisseur de paroi relativement élevée et/ou dans lesquels l'amincissement de paroi dû à l'accroissement de diamètre doit être compensé ou surcompensé.

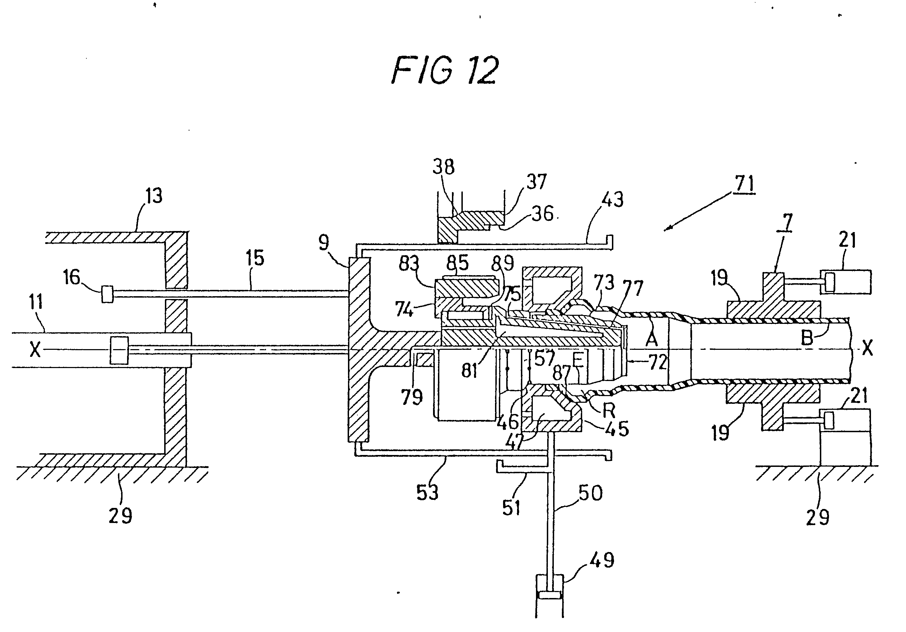

Pour le formage de pièces de couplage d'épaisseur de paroi relativement faible et/ou dans lesquels une compensation de la diminution d'épaisseur de paroi n'est pas nécessaire, on peut, pour la réalisation de pièces équipées d'un anneau d'étanchéité, utiliser un dispositif tel que représenté à la figure 12 et qui dérive en fait de ceux décrits aux figures 5 et aux figures 6-11.

Ce dispositif ne comporte pas de douille de formage mais par contre, le mandrin de formage 72 qui l'équipe est identique à celui du dispositif selon la figure 5 puisqu'il comporte des canaux 75 débouchant sur sa périphérie et raccordables à une source de vide non représentée.

Le dispositif selon la figure 12 ne se distingue de celui selon la figure 5 que par la présence d'un organe d'introduction de l'anneau d'étanchéité 37 qui est identique à celui équipant le dispositif selon les figures 6-11.

Avec ce dispositif, le manchon est préformé pneumatiquement de la même façon que celle expliquée en rapport avec le dispositif selon la figure 5.

Après retrait du mandrin de formage 72 du manchon préformé l'organe d'introduction de l'anneau d'étanchéité 37 assure la mise en place et l'abandon de l'anneau d'étanchéité R dans le manchon préformé selon un cycle de travail identique à celui qui a été décrit en rapport avec le dispositif selon les figures 6-11 et illustré aux figures 7-9. Ensuite, la partie terminale du manchon préformé qui est maintenue à l'état déformable est postformée autour de l'anneau d'étanchéité R et par l'intermédiaire de l'anneau de postformage 45 qui opère selon un cycle de travail analogue à celui décrit en rapport avec le dispositif selon les figures 6-11.

La figure 12 montre le dispositif dans la phase de postformage correspondant à celle décrite en rapport avec la figure 11 du dispositif précédent.

Les modes de réalisation décrits du procédé et du dispositif selon l'invention ont trait à la réalisation d'une pièce de couplage sur l'extrémité d'un tuyau en matière thermoplastique. Il est toutefois bien évident que l'invention peut permettre la réalisation de tout type de pièces de couplage.

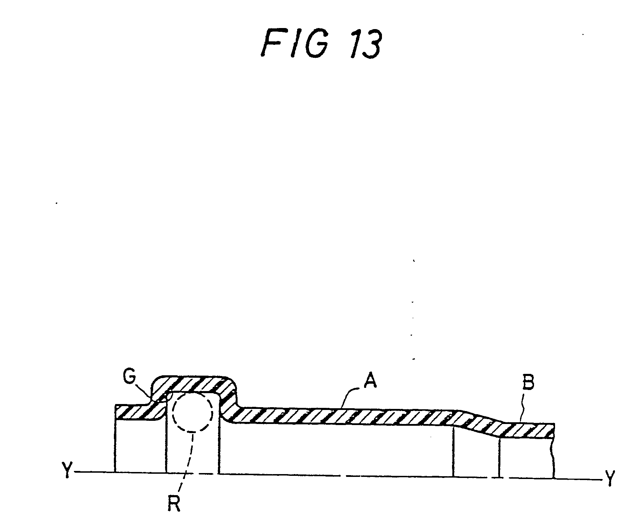

Les figures 13 à 17 montrent divers types de pièces de couplage qui peuvent être obtenues selon le procédé de l'invention et dans lesquelles les éléments d'étanchéité R sont représentés en traits interrompus.

La pièce de couplage montrée à la figure 13 présente une rainure annulaire G en contredépouille dans le manchon A moulé sur le tuyau B dans laquelle on peut insérer, comme élément d'étanchéité R, un O-ring classique.

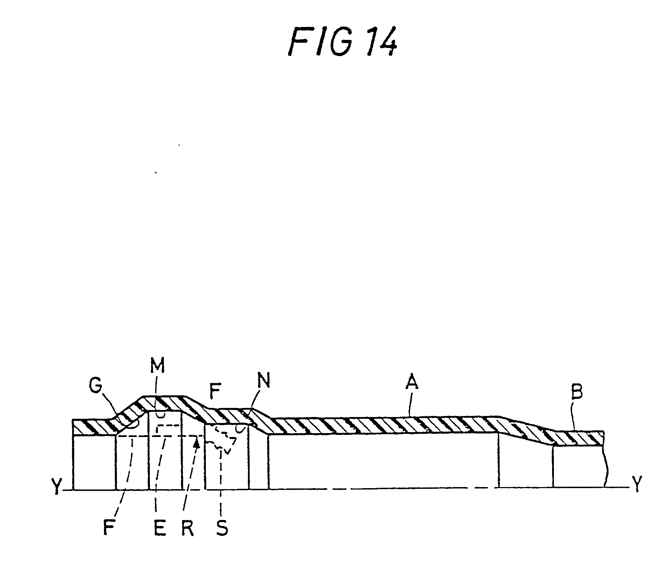

La rainure annulaire G illustrée à la figure 14 comporte deux parties cylindriques M et N de diamètres différents et est conçue pour être utilisée avec un anneau d'étanchéité R équipé d'un anneau support E et d'une lèvre d'étanchéité S.

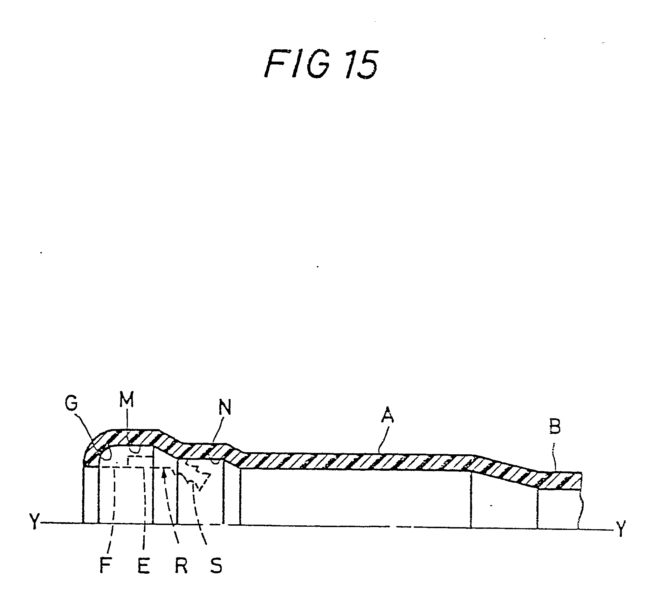

La pièce de couplage illustrée à la figure 15 comporte également une rainure annulaire G prolongée et est conçue pour être utilisée avec un anneau d'étanchéité R fixé par un anneau support E. Dans ce mode de réalisation, l'extrémité ouverte du manchon est postformée autour de l'anneau d'étanchéité.

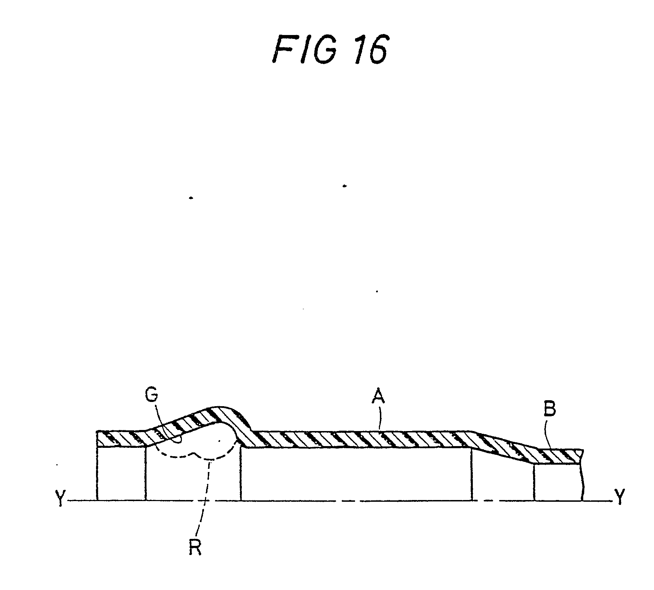

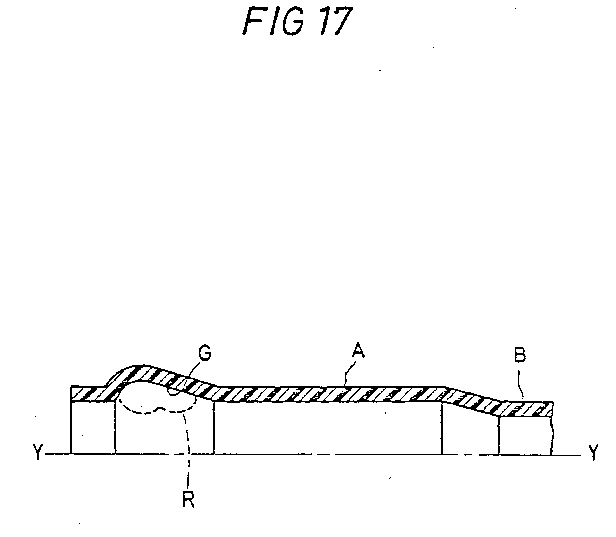

Les figures 16 et 17 montrent deux modes de réalisation de pièces de couplage utilisables avec un anneau d'étanchéité R tel que représenté.

0013040

- 18 -

<u>R E V E N D I C A T I O N S</u>

1 - Procédé pour la réalisation de pièces de couplage en matière thermoplastique présentant une rainure annulaire en contredépouille dans lequel on préforme d'abord, sur l'extrémité d'un tuyau en matière thermoplastique, un manchon ayant un diamètre interne croissant par paliers dans la direction de l'extrémité libre, et dans lequel on postforme ensuite la partie terminale du manchon préformé pour former la rainure annulaire en contredépouille et dans lequel enfin on refroidit le manchon postformé caractérisé en ce que durant le préformage, on maintient la partie terminale du manchon préformé à une température telle que celle-ci reste élastiquement déformable tandis que l'on refroidit le reste du manchon préformé à une température telle que celui-ci ne soit plus déformable.

2 - Procédé selon la revendication 1, caractérisé en ce que l'on introduit un anneau d'étanchéité dans la partie terminale du manchon préformé et en ce qu'on postforme cette partie terminale autour de l'anneau d'étanchéité de façon à obtenir une pièce de couplage dans laquelle l'anneau d'étanchéité est emprisonné dans la rainure annulaire en contredépouille.

3 - Dispositif pour la réalisation du procédé selon les revendications 1 ou 2, caractérisé en ce qu'il comporte un mandrin de formage (2, 72) déplaçable axialement dans l'extrémité ouverte du tuyau B à préformer et dont le diamètre croît par paliers d'une valeur minimale à son extrémité libre (3) jusqu'à une valeur maximale sur sa partie postérieure (4), la partie avant du mandrin (2, 72) comportant une chambre interne 25 pour la circulation d'un fluide réfrigérant et la partie postérieure comportant des moyens de chauffage (23, 85).

4 - Dispositif selon la revendication 3 caractérisé en ce que le mandrin de formage (72) est pourvu de canaux (75) qui débouchent sur sa périphérie et qui peuvent être raccordés à une source de vide.

5 - Dispositif selon l'une quelconque des revendications 3 à 4, caractérisé en ce qu'il comporte un anneau de postformage (45) déplaçable axialement et radialement entre une position de repos et une position de travail et qui en position de travail délimite un espace de postformage (59) avec le mandrin de formage (2, 72), ledit anneau de postformage (45) étant pourvu d'une chambre interne (47) pour la circulation d'un fluide réfrigérant.

6 - Dispositif selon la revendication 5, caractérisé en ce que l'anneau de postformage (59) est pourvu d'une surface de butée (46) coopérant avec le mandrin de formage (2, 72) et d'organes d'entraînement (51) coopérant avec des organes d'entraînement (52) couplés avec le mandrin de formage (2, 72).

7 - Dispositif selon l'une quelconque des revendications 3 à 6, caractérisé en ce qu'il comporte une douille de moulage (5) et un anneau de fermeture (31) déplaçables par rapport au mandrin de formage (2, 72) entre une position de repos et une position de travail et qui en position de travail délimitent un espace de préformage (55) avec le mandrin de formage (2, 72), la douille de moulage (5) étant pourvue d'une chambre interne (27) pour la circulation d'un fluide réfrigérant et l'anneau de fermeture (31) étant pourvu de moyens de chauffage (33).

8 - Dispositif selon l'une quelconque des revendications 3 à 7, caractérisé en ce qu'il comporte un organe d'introduction de l'anneau d'étanchéité (37) déplaçable axialement et radialement.

9 - Dispositif selon la revendication 8, caractérisé en ce que l'organe d'introduction de l'anneau d'étanchéité (37) est annulaire et est pourvu d'une surface de support (36) pour un anneau d'étanchéité R, d'une surface de butée (38) coopérant avec le mandrin de formage (2, 72) et d'organes d'entraînement (41) coopérant avec des organes d'entraînement (43) couplés au mandrin de formage (2, 72).

FIG 1

# FIG 2

0013040

# FIG 3

# FIG 4

# FIG 5

# FIG 6

## FIG 7

# FIG 8

FIG 9

FIG 10

**FIG 11**

FIG 12

# FIG 13

0013040

# FIG 14

# FIG 15

0013040

# FIG 16

# FIG 17

0013040

Numéro de la demande

**Office européen des brevets**

**RAPPORT DE RECHERCHE EUROPEENNE**

EP 79 20 073

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendication concernée | |
| EX | <u>NL - A - 78 02712 (WAVIN)</u><br><br>  * Figure 7; page 8, ligne 30 -<br>  page 9, ligne 3; page 9,<br>  lignes 15-22 *<br><br>& BE - A - 874 765<br>& DE - A - 2 909 538<br>& FR - A - 2 419 879<br>& GB - `A - 2 018 925 | 1-4 | B 29 C 17/02 |
| EX | <u>NL - A - 78 07139 (WAVIN)</u><br><br> `* Figures; page 4, lignes 10-14;<br>  conclusies 9,13 * | 1-4 | |
| | | | DOMAINES TECHNIQUES RECHERCHES (Int. Cl.³) |
| | <u>DE - A - 2 551 515 (BENNER)</u><br><br>  * Figures; page 9, lignes 16-22 * | 1 | B 29 C |
| E | <u>FR - A - 2 401 010 (JOHNS MANVILLE)</u><br><br>  * Figures; page 2, ligne  25 -<br>  page 3, ligne 4; page 7,<br>  lignes 17-20 *<br><br>& BE - A - 869 797<br>& DE - A - 2 836 035<br>& GB - A - 2 003 785<br>& NL - A - 78 08568 | 1-4 | |
| | | | CATEGORIE DES DOCUMENTS CITES |
| D | <u>FR - A - 2 144 424 (FORSMEDA IDEUT VECKLING)</u><br><br>  * Figure 1; page 2, ligne 30 -<br>  page 3, ligne 8 * | 1,2 | X: particulièrement pertinent<br>A: arrière-plan technologique<br>O: divulgation non-écrite<br>P: document intercalaire<br>T: théorie ou principe à la base<br>  de l'invention<br>E: demande faisant interférence<br>D: document cité dans<br>  la demande<br>L: document cité pour d'autres<br>  raisons |
| D | <u>NL - A - 74 08627 (WAVIN)</u><br><br>  * Figures 1,2; revendication 1 * | 1,2 | &: membre de la même famille,<br>  document correspondant |

Le présent rapport de recherche a été établi pour toutes les revendications

| Lieu de la recherche | Date d'achèvement de la recherche | Examinateur |
|---|---|---|
| La Haye | 24-03-1980 | CORDENIER |

OEB Form 1503.1   06.78

**RAPPORT DE RECHERCHE EUROPEENNE**

Office européen
des brevets

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| D | NL - A - 74 08628 (WAVIN) <br> * Figure 1; revendication 1 * <br><br> -- | 1 | |
| | DE - A - 2 143 240 (WAVIN) <br> * Figure 1; revendication 1 * <br><br> -- | 1 | |
| | FR - A - 2 146 208 (PETZETAKIS) <br> * Figures * <br><br> -- | 4 | **DOMAINES TECHNIQUES RECHERCHES (Int. Cl. 3)** |
| | FR - A - 2 178 953 (JOHNS MANVILLE) <br> * Figures; page 5, lignes 27-29 * <br><br> -- | 4 | |
| | FR - A - 2 302 180 (POLVA NEDER-LAND) <br> * Figures 1-3; page 9, lignes 17-20 * <br><br> -- | 5-7 | |
| A | DE - A - 2 134 538 (ANGER) | | |
| A | FR - A - 2 388 196 (WAVIN) <br><br> ---- | | |

OEB Form 1503.2 06.78